# EUROPEAN PATENT APPLICATION

(11) **EP 4 008 756 A1**
(43) Date of publication of application: **08.06.2022**
(21) Application number: 21020610.8
(22) Date of filing: 03.12.2021
(51) Int. Cl.: C09D 5/44

(54) **THE SYNTHESIS OF LAYERS OF THE ALIPHATIC POLYDOPAMINE**

(30) Priority: 03.12.2020 PL 43621820
(71) Applicant: University of Wroclaw, 50-137 Wroclaw (PL)
(72) Inventor: Zareba, Aleksandra, 58-309 Walbrzych (PL); Grzeszczuk, Maria, 54-151 Wroclaw (PL)
(74) Representative: Witek, Rafal

(57) **Abstract**

The essence of the present invention is the deposition procedure of a layer of the aliphatic polydopamine (PDA) is carried out by a elechemical and chemical method. The deposition procedure of a layer of the aliphatic polydopamine (PDA) on the conductive surface is carried out by the potentiodynamic electropolymerization from a dopamine solution as a functional monomer in the form of a dopamine-containing solution with a concentration of 10⁻¹⁰ M - 1 M in the supporting electrolyte 0.5 M - 0.001 M KCI / NaCl / LiCI, with a potential linearly changed in the range from - 0.8 V to + 0.65 V, preferably in the range from - 0.5 V to + 0.5 V. The conducting surfaces consist: glassy carbon (GC) disc electrodes (GCE), Pt electrodes (disc or plate), Au electrodes (disc or plate), stainless steel plates, carbon steel plates, graphite electrode (GE) (disc or tape), Ag electrodes (disc or plate), carbon tape. The dopamine electropolymerization toward PDA is also carried out alternatively by a potentiostatic method, i.e. at a constant potential from the range of + 0.12 V to + 0.65 V. The process of deposition of the aliphatic polydopamine layer is also carried out by a chemical method, from a solution of dopamine as a functional monomer in the supporting electrolyte 3 M - 0.00001 M KCI / NaCl / LiCl.

## Description

The known methods of polydopamine synthesis, leading mainly of the DHI (i.e. dihydroxyindole) mers, consist in the oxidation of catecholamines (dopamine, noradrenaline and L-DOPA) (Jaber and Lambert, 2010), and then their electropolymerization and/or chemical polymerization to a material similar to eumelanin, called "polydopamine". Catecholamines contain functional groups that cause a strong adhesion of the polydopamine layer on various types of substrates (e.g. glass, plastic, ceramics, fabric, metals such as silver, gold, platinum, palladium) and on carbon materials (e.g. activated carbon, glassy carbon , graphite). Most of the known catecholamine-based materials are made from dopamine in the presence of a Tris buffer at pH 8.5, using the oxygen oxidant dissolved in water. Ammonium persulfate or sodium periodate are also used as oxidants. Irradiation with UV radiation accelerates the formation of polymer precursor radicals (Du et al., 2014). The synthesis solution composition and the oxidant nature affect the kinetics of film deposition, as well as the composition and structure of the film. The use of a strong oxidant such as sodium periodate leads to a polydopamine film up to 100 nm thick in 2 hours from a solution containing 2 mg/ml dopamine and 10 mM NaIO₄ (Ponzio et al., 2016). In the standard procedure for the preparation of polydopamine, a layer thickness of 40-45 nm can be obtained after 16 hours. In this procedure, the polymerization solution consists of Tris buffer and O₂ as the oxidant (Lee et al., 2007). In general, the known structures and properties of pure polydopamine and its composites are very similar to eumelanin (black-brown pigment of skin and hair). This black and brown polydopamine is very easily removable from the surface of materials by electrochemical cleaning (H₂SO₄), mechanical cleaning (Al2O₃), or chemical cleaning (Piranha). One of the main problems of the "polydopamine" coatings is obtaining a durable and chemically stable modifying layer on the surfaces of materials such as metals and alloys (Au, Pt, Pd, Au, metal alloys, stainless steel), fabrics, carbon materials (carbon glassy (GC), activated carbon (GA), graphite (G)), mineral materials (ceramics, glass). Therefore, it is desirable to develop new methods to overcome the problem of peeling off and chemical stability of the polymer layers derived from dopamine. A main serious disadvantage of the chemical polymerization methods is formation of an insoluble black precipitate of polydihydroxyindole, known as "polydopamine", which is the main product in that cases. This product is deposited at the bottom of the reaction vessel and not on the modified material.

The essence of the present invention is the deposition procedure of a thin layer of the aliphatic polydopamine (PDA), on the conductive surface by the potentiodynamic electropolymerization from a dopamine solution as a functional monomer in the form of a dopamine-containing solution with a concentration of 10⁻¹⁰ M - 1 M in the supporting electrolyte 0.5 M - 0.001 M KCI / NaCl / LiCI, with a potential linearly changed in the range from - 0.8 V to + 0.65 V, preferably in the range from - 0.5 V to + 0.5 V. The conducting surfaces consist: glassy carbon (GC) disc electrodes (GCE), Pt electrodes (disc or plate), Au electrodes (disc or plate), stainless steel plates, carbon steel plates, graphite electrode (GE) (disc or tape), Ag electrodes (disc or plate), carbon tape. The dopamine electropolymerization toward PDA is also carried out alternatively by a potentiostatic method, i.e. at a constant potential from the range of + 0.12 V to + 0.65 V. The process of deposition of the aliphatic polydopamine layer is also carried out by a chemical method, from a solution of dopamine as a functional monomer in the supporting electrolyte 3 M - 0.00001 M KCl / NaCl / LiCI.

The method of obtaining the so-called primary polydopamine allows to obtain a uniform layer, with a large active surface, high mechanical strength and resistant to chemical factors (acids, alcohols, organic solvents). During the presented electrochemical or chemical polymerization of dopamine, no insoluble black precipitate is formed. Instead, only a thin transparent layer of primary polydopamine is formed, consisting of the true dopamine units. The obtained primary/aliphatic polydopamine, abbreviated as PDA, layer shows conductive properties, catalytic properties for the electrode reduction of oxygen, and it purifies water; e.g. from colored metal salts, urea, ammonia. The obtained primary/aliphatic PDA, material did not show chloride poisoning, which was observed for brown-black polydopamine.
Figure 1 shows cyclic voltamperograms of the electrosynthesis of an aliphatic polydopamine sample;
Figure 2 shows chronoamperograms of the electrosynthesis of an aliphatic polydopamine sample;

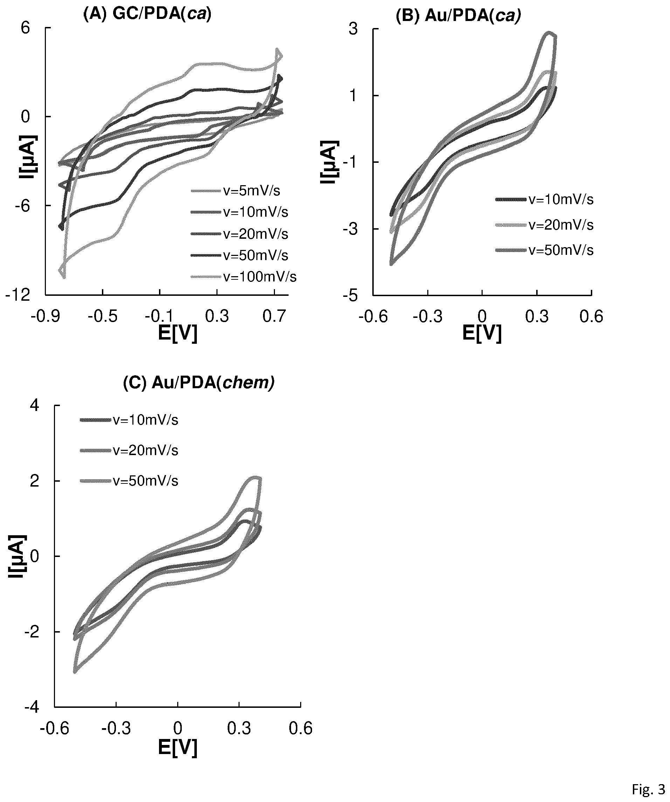

Figure 3 shows cyclic voltamperograms of an aliphatic polydopamine layer;

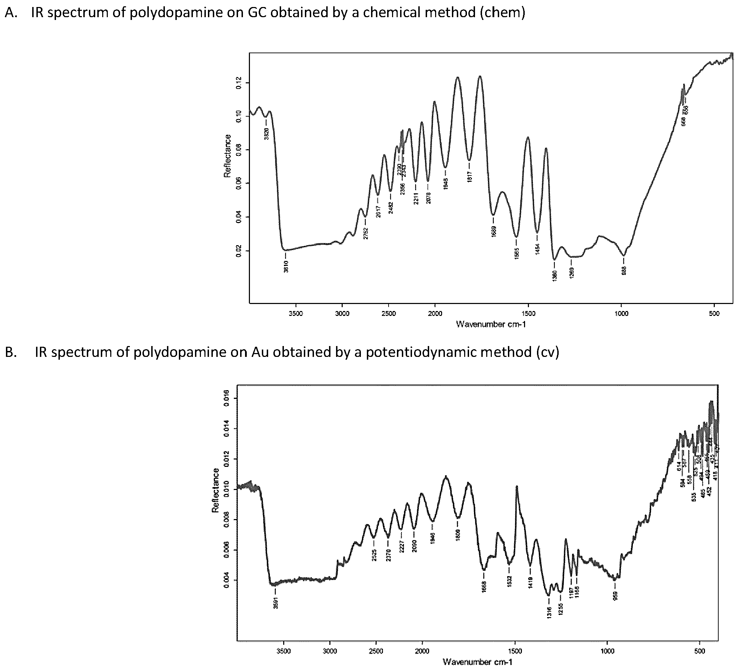

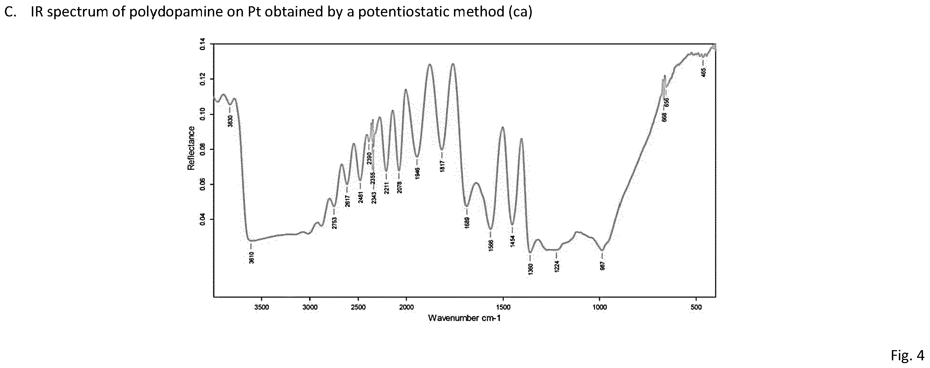

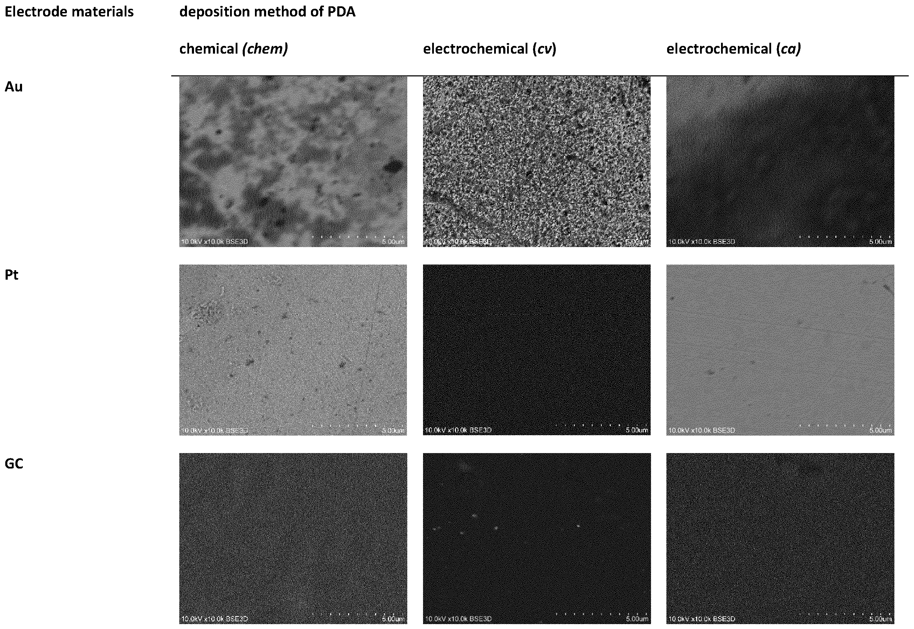

Figure 4 shows the IR characteristics of the selected PDA-aliphatic coatings;

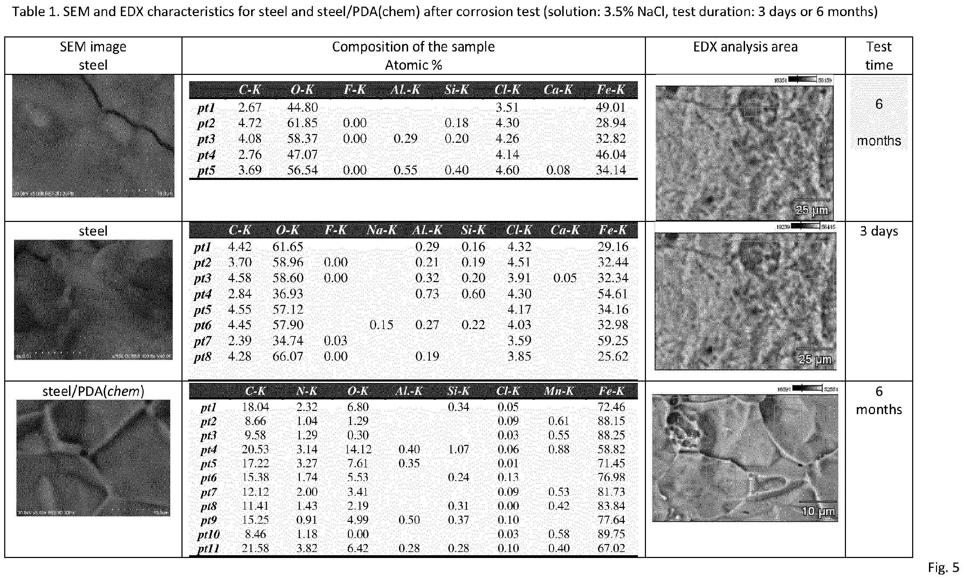

Figure 5 shows SEM images of the selected polydopamine layers.

### Example 1. Synthesis of the aliphatic polydopamine by potentiodynamic method

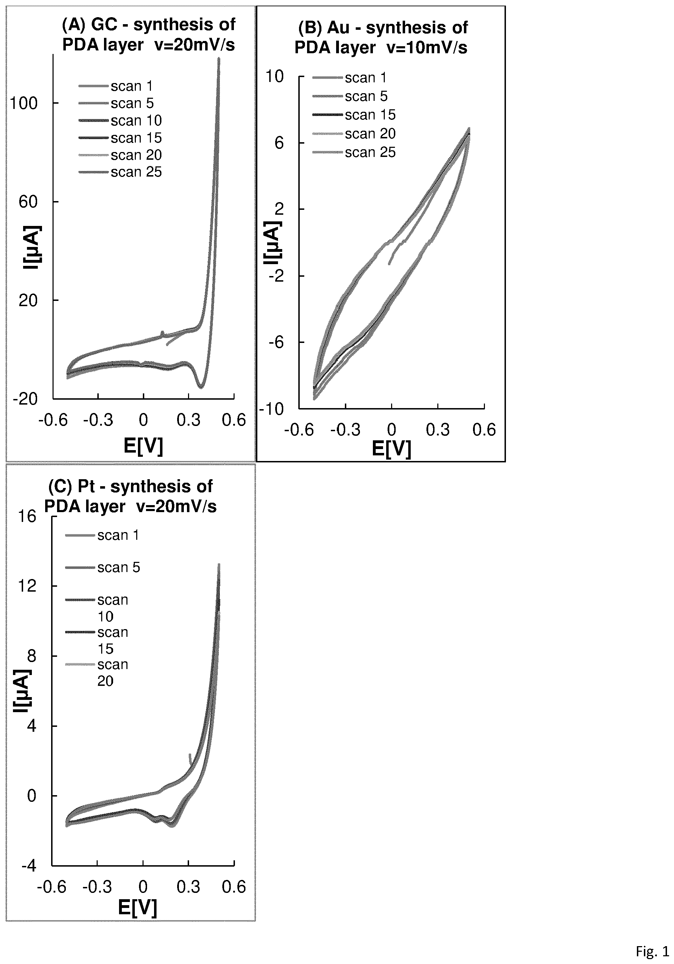

Preparation of conductive surfaces, i.e. GC (A), Au (B), Pt (C) begins with thorough cleaning of the substrate surface, before deposition of polydopamine, mechanically (aluminum oxide), chemically (Piranha), and electrochemically (0.1 M H₂SO₄) by cyclic potential sweeping at a rate of 100 mV/s, in the potential range (from - 0.2 V to + 1.6 V). Potentiodynamic deposition of polydopamine was carried out in the potential range (from - 0.5 V to + 0.5 V), at the scanning rate: 20 mV/s for GC and Pt, 10 mV/s for Au, 50 mV/s for steel), during 25 cycles in deoxygenated solution (0.1 M KCI + 0.1 M DA). After electrosynthesis, polydopamine was washed in H₂O. As a result of the electropolymerization reaction with a controlled electrode potential, the formation of a transparent thin film on the surface of the electrodes GC, Au, Pt can be seen. Cyclic voltamperograms of electrosynthesis are shown in Figures 1A, 1B, 1C.

### Example 2. Synthesis of aliphatic polydopamine by potentiostatic method

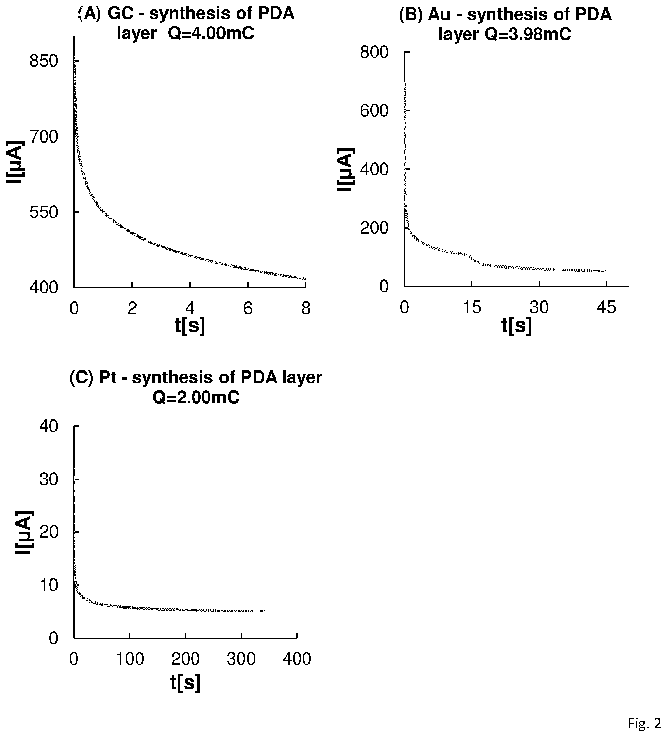

Preparation of conductive surfaces, i.e. GC (A), Au (B), Pt (C) begins with thorough cleaning of the substrate electrode surface mechanically (aluminum oxide), chemically (Piranha), and electrochemically (0.1M H₂SO₄) by cyclic sweeping potentials at a rate of 100 mV/s in the potential range (- 0.2 V to + 1.6 V), prior to polydopamine deposition. The potentiostatic deposition of polydopamine was performed at + 0.5V, in a deoxygenated solution (0.1 M KCI + 0.1 M DA). The thickness of the polymer layer was controlled by monitoring the electropolymerization charge. After polydopamine electrosynthesis, the electrode was rinsed in a clean water to remove excess of the unbound polymer and dopamine. The electrosynthesis chronoamperograms are shown in Figures 2A, 2B, 2C.

### Example 3. Chemical synthesis of aliphatic polydopamine

The preparation of the base surfaces, i.e. GC (A), Au (B), Pt (C), begins with their thorough triple cleaning before deposition of polydopamine: mechanically (aluminum oxide), chemically (Piranha), and electrochemically (0.1 M H₂SO₄) by cyclic potential sweeping at a rate of 100 mV/s in the potential range (from - 0.2 V to + 1.6 V). DA (0.1 M) was added to aqueous solution containing 0.1 M KCI, and then the GC, Au, Pt and steel electrodes were immersed there for 8 hours. Afterwards, the resulting coatings were rinsed with water. As a result of the chemical polymerization reaction, the formation of a transparent thin film on the surface of GC, Au, Pt, and steel can be seen.

## Claims

1. The method of obtaining, by means of electrochemical polymerization aliphatic polydopamine layer, **characterized in that** the process of deposition of this polymer layer is carried out on a conducting surface by a potentiodynamic method from dopamine solution as a functional monomer in the form of a dopamine-containing solution with a concentration of 10⁻¹⁰ M - 1 M in the supporting electrolyte 0.5 M - 0.001 M KCI / NaCl / LiCI, with a potential linearly changed in the range from - 0.8 V to + 0.65 V, preferably in the range from - 0.5 V to + 0.5 V. The conductive surface consists of glassy carbon disc electrodes (GCE), Pt electrodes (disc or plate), Au electrodes (disc or plates), stainless steel plates, carbon steel plates, graphite (GE) electrode (disc or tape), Ag electrodes (disc or plate), carbon tape.

2. The method of obtaining, an aliphatic polydopamine layer according to claim 1, **characterized in that** dopamine polymerization is carried out at a constant potential in the potential range from + 0.12V to + 0.65V.

3. The method of obtaining an aliphatic polydopamine layer according to claim 1, **characterized in that** the deposition process of the polydopamine layer on the surface is carried out via a chemical method from a solution of dopamine as a functional monomer in the supporting electrolyte 3 M - 0.00001 M KCI / NaCl / LiCI.
